# EUROPÄISCHE PATENTSCHRIFT

(11) **EP 2 877 828 B1**
(45) Veröffentlichungstag und Bekanntmachung des Hinweises auf die Patenterteilung: **11.07.2018**
(21) Anmeldenummer: 13739145.4
(22) Anmeldetag: 17.07.2013
(51) Int. Cl.: G01N 1/42, A01N 1/02

(54) **VERFAHREN UND VORRICHTUNG ZUR HOCHGESCHWINDIGKEITS-TEMPERIERUNG EINER PROBE**
METHOD AND DEVICE FOR THE HIGH-TEMPERATURE TEMPERATURE CONTROL OF A SAMPLE
PROCÉDÉ ET DISPOSITIF POUR UN CONDITIONNEMENT THERMIQUE TRÈS RAPIDE D'UN ÉCHANTILLON

(30) Priorität: 25.07.2012 DE 102012014791
(43) Veröffentlichungstag der Anmeldung: 03.06.2015
(73) Patentinhaber: Fraunhofer-Gesellschaft zur Förderung der angewandten Forschung e.V., 80686 München (DE); Max-Planck-Gesellschaft zur Förderung der Wissenschaften e.V., 80539 München (DE)
(72) Erfinder: FUHR, Günter R., 13187 Berlin (DE); ZIMMERMANN, Heiko, 97295 Waldbrunn (DE); STRACKE, Frank, 66123 Saarbrücken (DE); SCHMITT, Daniel, 66806 Ensdorf (DE); GRABENBAUER, Markus, 69234 Dielheim (DE); BASTIAENS, Philippe, 42119 Wuppertal (DE); WEHNER, Frank, 44265 Dortmund (DE)
(74) Vertreter: v. Bezold & Partner Patentanwälte - PartG mbB
(86) Internationale Anmeldenummer: PCT/EP2013/002126
(87) Internationale Veröffentlichungsnummer: WO 2014/015962

(56) Entgegenhaltungen:
- EP-A1- 0 853 238
- CH-A- 459 598
- US-A- 5 493 865
- US-A1- 2007 231 787
- US-B1- 6 269 649
- JOHN C GILKEY ET AL: "Advances in Ultrarapid Freezing for the Preservation of Cellular Ultrastructure", JOURNAL OF ELECTRON MICROSCOPY TECHNIQUE, 1. Januar 1986 (1986-01-01), Seiten 3-177, XP055086744,
- Air Liquide: "Helium, He, Physical properties, safety, MSDS, enthalpy, material compatibility, gas liquid equilibrium, density, viscosity, flammability, transport properties", , 5. November 2013 (2013-11-05), XP055086737, Gefunden im Internet: URL:http://encyclopedia.airliquide.com/enc yclopedia.asp [gefunden am 2013-11-05]
- W. B. BALD: "The relative merits of various cooling methods", JOURNAL OF MICROSCOPY, Bd. 140, Nr. 1, 1. Oktober 1985 (1985-10-01), Seiten 17-40, XP055086462, ISSN: 0022-2720, DOI: 10.1111/j.1365-2818.1985.tb02657.x in der Anmeldung erwähnt
- H. MOOR ET AL: "The influence of high pressure freezing on mammalian nerve tissue", CELL AND TISSUE RESEARCH, Bd. 209, Nr. 2, 1. Juli 1980 (1980-07-01), XP055086815, ISSN: 0302-766X, DOI: 10.1007/BF00237626

## Beschreibung

Die Erfindung betrifft ein Verfahren zur Temperierung einer Probe, insbesondere einer biologischen Probe, z. B. mit adhärenten biologischen Zellen, oder einer nicht-biologischen Probe, z. B. mit chemischen Reaktionspartnern, mit einer sprunghaften Temperatureinstellung, insbesondere zum eiskristallfreien Einfrieren und/oder eiskristallfreien Auftauen der Probe. Des Weiteren betrifft die Erfindung eine Temperierungsvorrichtung zur Temperierung einer Probe. Anwendungen der Erfindung sind bei der Beobachtung dynamischer Vorgänge z. B. in biologischen, biochemischen oder chemischen Proben, oder bei der Kryokonservierung biologischer Zellen gegeben.

In der Forschung besteht häufig ein Interesse, Prozesse in dynamischen Systemen zu definierten Zeitpunkten anzuhalten (Fixierung), eine Untersuchung am fixierten System auszuführen (Aufnahme eines "Standbildes") und anschließend die Prozesse möglichst ohne eine Veränderung des Systems durch die Unterbrechung weiter laufen zu lassen. Beispiele von derartigen Prozessen sind die Ausbildung von Phasen in Werkstoffen (Materialwissenschaft), räumlich propagierende chemische Reaktionen (Chemie), turbulente Strömungen (Physik) oder zellbiologische Vorgänge (Biologie). Häufig haben die zu untersuchenden dynamischen Systeme eine hohe Komplexität, was besonders für biologische Systeme gilt, so dass die Fixierung des Systems eine hohe technische Herausforderung darstellt.

Zur Fixierung können dynamische Systeme einer sprunghaften Temperaturverringerung bis zu einer Temperatur unterzogen werden, bei der die Geschwindigkeit der Prozesse im System extrem verlangsamt ist oder Null wird (Einfrieren des Systemzustands). Die Geschwindigkeit der sprunghaften Temperaturverringerung (Temperierungsrate) sollte im Vergleich zur Geschwindigkeit von Prozessen im System so hoch sein, dass das System nicht oder nur vernachlässigbar wenig auf die Temperaturänderung reagieren kann. Insbesondere in biologischen Systemen, die typischerweise Wasser enthalten, bedeutet dies, dass die Temperierungsrate idealerweise so hoch sein sollte, dass das Wasser nicht Eiskristalle bildet, sondern amorph oder glasartig erstarrt (Vitrifikation). Wenn das System unter ca. -140 °C abgekühlt wurde, ohne Eis zu bilden, ist der vitrifizierte Zustand stabil. Physiologische Prozesse reagieren weniger schnell auf Temperatursprünge und können in vitrifizierter wässriger Probe als fixiert betrachtet werden.

Für die Fixierung und ggf. anschließende Konservierung von biologischen Systemen ist die Vitrifikation wünschenswert, da sonst durch das Wachstum von Eiskristallen erhebliche Zellschäden auftreten können. Die Vitrifikation von reinem Wasser erfordert eine Abkühlrate von ungefähr 10⁶ K/s. In der Praxis ist die Abkühlrate durch die Wärmeleitfähigkeit des Wassers begrenzt, so dass nur dünne Schichten reinen Wassers, z. B. dünner als 1 µm über der kühlenden Oberfläche, einer Vitrifikation unterzogen werden können. Biologische Proben bestehen nicht aus reinem Wasser, sondern aus komplexen Mischungen, die aufgrund ihrer Zusammensetzung und ggf. der Zugabe einer Gefrierschutzsubstanz (Kryoprotektivum) einfacher oder mit einer geringeren Abkühlrate einer Vitrifikation unterzogen werden können. Mit einer Reihe von Kryoprotektiva wurden bereits Kryokonservierungserfolge erzielt (siehe z. B. L. L. Kuleshova et al in "Biomaterials" Bd. 28, 2007, S. 1585 - 1596; und T. Li et al. in "Human Reprod." Bd. 23, 2007, S. 358 - 364). Es wurde festgestellt, dass bei Zusatz von Kryoprotektiva zur Probe die Erzeugung vitrifizierter Zustände in Volumina tierischer Zellen bis hin zu einigen mm³ ermöglicht wird (siehe z. B. J. L. M. Leunissen et al. in "J. Microsc." Bd. 325, 2009, S. 25 - 35.). Es besteht ein Interesse, möglichst wenige oder keine fremde Substanzen wie Kryoprotektiva den Kultur- und Kryokonservierungsmedien zuzusetzen oder sogar in die Zellen einzuführen. Um dennoch eine Vitrifikation zu erhalten, ist eine Erhöhung der Abkühlrate erforderlich.

Es wird daher seit langem versucht, Zellen mit einer möglichst hohen Abkühlrate einzufrieren, wie z. B. durch Einschießen von Proben in flüssigen Stickstoff (siehe H. Hoagland et al. in "J. General Physiol." Bd. 25, 1942, 337-344), Aufsprühen eines Kühlmediums, wie z. B. von flüssigem Stickstoff, auf Oberflächen oder Verwendung einer Düse für gekühlte Gase (US 2009/0126373 A1). Die herkömmlichen Verfahren haben jedoch erhebliche Nachteile bei der praktischen Anwendung, beispielsweise in Bezug auf die unerwünschte Kontamination der Probe mit flüssigem Stickstoff, die beschränkte Steuerbarkeit der Temperatur der Probe, die eingeschränkte Möglichkeit, an der Probe Beobachtungen und insbesondere Messungen vor, während und nach der thermischen Fixierung auszuführen. Die für die Fixierung von nativen (d.h. von verglasungsfördernden Zusätzen freien) Zuständen biologischer Proben konnten mit bisherigen Techniken nicht erreicht werden. Von Nachteil ist auch die Anpassung der herkömmlichen Verfahren speziell auf das Einfrieren biologischer Proben und die beschränkte Anwendbarkeit bei anderen Probenarten.

Insbesondere beim Aufsprühen von flüssigen Gasen auf eine Oberfläche, welche die Probe trägt, besteht ein limitierender Faktor in der beschränkten Benetzbarkeit der zunächst warmen Oberfläche. Wegen des Leidenfrost'schen Phänomens entsteht an der Oberfläche eine isolierende Dampfschicht mit einer im Vergleich zum flüssigen Gas drastisch verringerten Wärmeleitung, so dass die Abkühlrate an der Oberfläche beschränkt wird. Des Weiteren ist die technisch mögliche Strömungsgeschwindigkeit und damit die Kühlleistung limitiert. Bei Verwendung eines gasförmigen Kühlmediums hingegen ist durch dessen geringere Dichte die volumenbezogene Wärmekapazität zu gering, um eine für praktische Untersuchungen ausreichende Kühlleistung zu erzielen.

Weitere Kühlverfahren werden von W. B. Bald in "Journal of Microscopy" (Bd. 140, 1985, S. 17 - 40), in EP 373 738 A2 und in der Produktdokumentation "HPM 010 High Pressure Freezing Machine" (2000, Balzers, Liechtenstein) beschrieben. Das Einfriergerät "HPM 010" ist dafür vorgesehen, Proben für die Kryo-Elektronen-mikroskopie vorzubereiten. Anwendungen des Einfriergerätes "HPM 010" werden von A. Zingg ("Cement and Concrete Research", Bd. 38, 2008, S. 552 - 529), A. C. Borges er al. ("Acta Biomater.", Bd. 7, 2011, S. 3412 - 3421) und K. McDonald et al. ("Methods in Cell Biology", Bd. 79, 2007, S. 23 - 56) beschrieben. Im Einfriergerät "HPM 010" wird das Kühlmittel (flüssiger Stickstoff) mit erhöhtem Druck, jedoch außerhalb des überkritischen Zustands auf einen unter Druck deformierbaren Metallbehälter geleitet, der die Probe enthält. Bei diesem Einfriergerät bestehen Nachteile in Bezug auf eine begrenzte Einfriergeschwindigkeit und die Tatsache, dass die gesamte Probe unter Druck gesetzt werden muss, um den Gefrierpunkt und die Nukleationstemperatur zu senken. Des Weiteren ist eine Beobachtung der Probe während des Einfrierens ausgeschlossen. Zur Beobachtung mit dem Elektronenmikroskop muss der Behälter danach im kalten Zustand geöffnet und die Probe präpariert werden.

Ein genereller Nachteil der herkömmlichen Verfahren ergibt sich aus deren für das Einfrieren von Proben spezialisierten Gestaltung. Andere Temperierungsvorgänge, wie z. B. ein sprunghaftes Auftauen einer Probe, sind mit den herkömmlichen Verfahren in der Regel nicht ausführbar. Bei der oben genannten Untersuchung dynamischer Systeme ist es jedoch von Bedeutung, dass sich die Prozesse im System nach der Aufnahme des Standbildes und der Beendigung der Fixierung durch eine Erwärmung möglichst ungestört fortsetzen können. Beispielsweise ist bei biologischen Proben von Interesse, eine Erwärmung so auszuführen, dass beim Auftauen keine Eiskristalle entstehen und die Probe nicht überheizt wird.

Verfahren zum schnellen Einfrieren biologischer Proben unter erhöhtem Druck werden von J.C. Gilkey et al. in "Journal of Electron Microscopy Technique", Bd. 3, 1986, S. 3-177, in US 2007/231787 A1, US 6 269 649 B1 und von H. Moor et al. in "Cell and Tissue Research", Bd. 209, 1980, S. 201-216, beschrieben.

Aufgaben der Erfindung sind es, ein verbessertes Verfahren und eine verbesserte Vorrichtung zur Temperierung einer Probe, insbesondere einer biologischen Probe, mit einer sprunghaften Temperatureinstellung bereitzustellen, mit denen die Nachteile und Beschränkungen herkömmlicher Techniken vermieden werden. Durch die Erfindung soll insbesondere ermöglicht werden, die Temperatur von Proben mit einer im Vergleich zu den herkömmlichen Techniken erhöhten Temperierungsrate zu ändern, Temperaturerhöhungen oder -erniedrigungen zu realisieren, eine Endtemperatur der Temperaturänderung einzustellen und/oder die Probe zu überwachen. Insbesondere soll mit der Erfindung eine verbesserte Technik zur Vitrifikation biologischer Proben und deren schonendes Erwärmen bereitgestellt werden. Sprunghafte Temperatureinstellungen sollen insbesondere während einer Beobachtung der Probe zu jedem gewünschten Zeitpunkt auszulösen sein.

Diese Aufgaben werden jeweils durch ein Verfahren und eine Vorrichtung zur Temperierung einer Probe, insbesondere einer biologischen Probe, mit den Merkmalen der unabhängigen Ansprüche gelöst. Vorteilhafte Ausführungsformen und Anwendungen der Erfindung ergeben sich aus den abhängigen Ansprüchen. Gemäß einem ersten Gesichtspunkt der Erfindung wird die oben genannte Aufgabe durch ein Verfahren zur Temperierung einer Probe gelöst, bei dem die Probe auf einer Vorderseite eines Trägersubstrats bereitgestellt und zu dem Trägersubstrat ein Temperierungsmedium zugeführt wird, wodurch sich die Temperatur der Probe sprungartig verändert. Gemäß der Erfindung wird das Temperierungsmedium im überkritischen Zustand und mit einem Druck, der höher als der Atmosphärendruck (Normaldruck) ist, mit der Rückseite des Trägersubstrats in Kontakt gebracht, wobei die Probe auf der Vorderseite des Trägersubstrats bei Atmosphärendruck bereitgestellt wird.

Gemäß einem zweiten Gesichtspunkt der Erfindung wird die oben genannte Aufgabe durch eine Temperierungsvorrichtung zur Temperierung einer Probe gelöst, wobei die Temperierungsvorrichtung ein Trägersubstrat mit einer Vorderseite umfasst, die zur Aufnahme der Probe eingerichtet ist, und das Trägersubstrat für eine Zufuhr eines Temperierungsmediums, insbesondere zu einer Rückseite des Trägersubstrats, angeordnet ist. Des Weiteren umfasst die Temperierungsvorrichtung eine Zufuhrleitung mit einer zum Trägersubstrat weisenden Austrittsöffnung, wobei die Zufuhrleitung zur Zufuhr des Temperierungsmediums zu der Rückseite des Trägersubstrats angeordnet ist. Gemäß der Erfindung ist die Zufuhrleitung angepasst, das Temperierungsmedium im überkritischen Zustand und mit einem Druck, der höher als der Atmosphärendruck ist, zum Trägersubstrat zu leiten. Des Weiteren ist die Vorderseite des Trägersubstrats zur Aufnahme der Probe bei Atmosphärendruck eingerichtet.

Die Erfindung basiert insbesondere auf der Idee, eine Zufuhr des Kühlmediums zum Trägersubstrat mit hoher Geschwindigkeit und hoher Wärmekapazität zu ermöglichen, ohne am Trägersubstrat eine isolierende Dampfschicht zu bilden, indem das Kühlmedium unter Druck steht und mindestens bis zum Kontakt mit dem Trägersubstrat überkritisch bleibt. Der überkritische Zustand des Kühlmediums bedeutet, dass der Druck und die Temperatur in einem Bereich des Phasendiagramms des Kühlmediums gewählt sind, in dem die Dichte der flüssigen Phase und der gasförmigen Phase des Kühlmediums gleich sind. Mit der Kompression des überkritischen Kühlmediums wird vorteilhafterweise dessen Dichte und daher die Wärmeaufnahme bei der Abkühlung oder die Wärmezufuhr beim Aufheizen erhöht. Des Weiteren verhindert die Verwendung des Kühlmediums im überkritischen Zustand sowohl beim Abkühlen, als auch beim Aufheizen eine Ausbildung von Phasengrenzen. Bei geeigneter Wahl der Prozessparameter kann das komprimierte Kühlmedium von der Dichte einer Flüssigkeit ohne Verdampfung in den gasförmigen Zustand überführt werden und so die Vorrichtung verlassen.

Vorteilhafterweise ermöglicht die Erfindung, kurzlebige Zustände gezielt und unbeeinflusst zu fixieren und mit Methoden zu untersuchen, deren Aufnahmegeschwindigkeit ansonsten für ein Studium dieser Zustände zu langsam wäre. Dazu zählen z. B. viele optische Mikroskopietechniken mit erhöhter Ortsauflösung, spektraler oder zeitlicher Auflösung. Dies ist derzeit mit keiner anderen Fixierungstechnologie, insbesondere weder thermisch, noch chemisch, zu realisieren. Ein weiterer wichtiger Vorteil der Erfindung ist es, dass die Temperatur von Proben mit einer im Vergleich zu den herkömmlichen Techniken erhöhten Temperierungsrate geändert werden und/oder die Proben überwacht werden können kann, ohne die Probe durch Zusätze oder z. B. einen übermäßig erhöhten Druck aus ihrem natürlichen Zustand zu bringen, zu bewegen oder anderweitig zu manipulieren.

Mit dem Begriff "Temperierung" der Probe wird allgemein eine Temperaturänderung bezeichnet, die in Abhängigkeit vom Temperaturunterschied zwischen dem überkritischen Temperierungsmedium und dem Trägersubstrat mit der Probe eine Temperatursenkung (Abkühlung, insbesondere eiskristallfreies Einfrieren) oder eine Temperaturerhöhung (Aufheizung, insbesondere eiskristallfreies Auftauen) umfassen kann. Entsprechend wird das Temperierungsmedium als Kühlmedium oder als Heizmedium bezeichnet. Wenn das Trägersubstrat mit der Probe bei einer Temperatur über dem Gefrierpunkt von Wasser angeordnet ist, bewirkt die Verwendung des Kühlmediums einen Übergang der Probe in den festen Zustand. Der Übergang in den festen Zustand wird hier auch als Einfrieren der Probe bezeichnet, wobei insbesondere keine Eiskristalle wachsen und/oder ausschließlich nanodisperses Eis gebildet wird (Vitrifikation). Nanodisperses Eis umfasst Eisteilchen, die kleiner als 100 nm, insbesondere kleiner als 10 nm, z. B. kleiner als 5 nm sind. Umgekehrt bewirkt bei einer Temperatur der Probe unter dem Gefrierpunkt von Wasser die Verwendung des Heizmediums einen Übergang der Probe in den flüssigen Zustand. Dieser Übergang wird hier auch als Auftauen der Probe bezeichnet. Das Temperierungsmedium ist allgemein eine Substanz, umfassend ein chemisches Element oder eine chemische Verbindung oder eine Zusammensetzung, die im überkritischen Zustand in den für die Abkühlung oder die Aufheizung der Probe interessierenden Temperaturbereichen bereitgestellt werden können. Sowohl für die Abkühlung als auch für die Aufheizung kann dasselbe Temperierungsmedium, jeweils mit verschiedenen Temperaturen im überkritischen Zustand, verwendet werden. Bevorzugt umfasst das Temperierungsmedium Stickstoff, das im überkritischen Zustand (p > 34 bar) sowohl bei Temperaturen unter dem Gefrierpunkt von Wasser, z. B. - 140 °C als auch Temperaturen über dem Gefrierpunkt von Wasser, z. B. 40 °C bereitgestellt werden kann. Weitere Beispiel von Temperierungsmedien sind Helium, Wasserstoff, Argon, oder Methan.

Die Probe umfasst allgemein eine veränderliche flüssige Zusammensetzung von Substanzen, wie z. B. Werkstoffe, chemische Reaktionspartner oder - besonders bevorzugt - biologische Zellen oder Zellbestandteile. Die Zellen bilden auf der Vorderseite des Trägersubstrats oder auf der Rückseite eines Beobachtungsfensters einer Probenkammer, deren Boden das Trägersubstrat bildet, vorzugsweise eine adhärente Zellkultur, insbesondere in Gestalt einer Zell-Monolage. Besteht die Probe aus einer sehr dünnen Schicht zwischen Trägersubstrat und dem Beobachtungsfenster, ist die Adhärenz nicht zwingend notwendig. Die Probe wird erfindungsgemäß bei Normaldruck (Atmosphärendruck) bereitgestellt und temperiert (eingefroren oder aufgetaut).

Das Trägersubstrat (oder: Kühlsubstrat) bildet gleichzeitig eine Probenaufnahme und einen Wärmetauscher. Es ist allgemein ein plattenförmiges, ebenes oder gekrümmtes Bauteil, dessen eine Oberfläche (hier als Vorderseite bezeichnet) eine Aufnahme für die Probe bildet und dessen andere Oberfläche (hier als Rückseite bezeichnet) eine Wärmetauscherfläche bildet. Bei einer selbsthaftenden Probe, wie z. B. einer adhärenten Zellkultur, wird mit der frei liegenden Oberfläche der Vorderseite, die ggf. eine Modifizierungsschicht trägt, die Probenaufnahme bereitgestellt. Andernfalls, z. B. für nichtadhärente Proben, können auf der Vorderseite Aufnahmestrukturen, z. B. zur Bildung eines Gefäßes zur Aufnahme einer Probe aus flüssigen Reaktionspartnern, vorgesehen sein. Die Rückseite ist vorzugsweise eine ebene, zur Benetzung mit dem Kühlmedium freiliegende Oberfläche. Die Rückseite kann aber auch Oberflächenstrukturen, wie z. B. Vorsprünge oder Vertiefungen, aufweisen, mit denen das Temperierungsmedium in Kontakt gebracht werden kann.

Erfindungsgemäß wird das Temperierungsmedium mit dem Trägersubstrat in Kontakt gebracht. Für die Erzielung einer sprunghaften Temperaturänderung ist es von Vorteil, wenn gemäß einer bevorzugten Ausführungsform der Erfindung das Temperierungsmedium im überkritischen Zustand zu der Rückseite des Trägersubstrats bewegt wird. Es wird eine Strömung des Temperierungsmediums zu der Rückseite des Trägersubstrats gebildet. Die Strömung ist mit einem definierten Startzeitpunkt und mit einer vorbestimmten Strömungsgeschwindigkeit realisierbar. Die Strömungsgeschwindigkeit kann in Abhängigkeit vom Temperierungsmedium und den gewünschten Temperaturen gewählt werden.

Vorteilhafterweise bestehen verschiedene Varianten, die Strömung des Temperierungsmediums relativ zur Rückseite des Trägersubstrats zu lenken. Die Strömung kann durch die Gestaltung der Zufuhrleitung und deren Austrittsöffnung orientiert werden. Gemäß einer ersten Variante ist eine Strömungsrichtung parallel zur Oberflächennormalen der Rückseite des Trägersubstrats vorgesehen. Das Temperierungsmedium strömt senkrecht auf die Rückseite und anschließend seitlich vom Trägersubstrat weg. In diesem Fall können sich Vorteile für eine besonders effiziente Wärmeübertragung ergeben. Alternativ ist gemäß einer zweiten Variante eine Strömungsrichtung senkrecht zur Oberflächennormalen der Rückseite des Trägersubstrats vorgesehen. Das Temperierungsmedium strömt parallel über die Rückseite am Trägersubstrat vorbei. In diesem Fall können sich Vorteile aus einem geringen Strömungswiderstand ergeben.

Erfindungsgemäß wird eine sprunghafte Temperaturänderung realisiert. Mit dem Begriff "sprunghafte Temperaturänderung" (oder: sofortige Temperaturänderung, instantane Temperaturänderung) wird eine Veränderung der Probentemperatur von einer Ausgangstemperatur (Starttemperatur) zu einer Endtemperatur (Zieltemperatur) mit einer Geschwindigkeit (Temperierungsrate) bezeichnet, gegenüber der die Geschwindigkeit von Prozessen in der Probe, geringer oder vernachlässigbar klein sind.

Vorzugsweise ist Temperierungsrate größer als 5.000 K/s, insbesondere größer als 20.000 K/s, z. B. größer als 50.000 K/s, oder sogar 100.000 K/s oder mehr. Die Temperaturänderung der Probe erfolgt im Wesentlichen zeitgleich mit der durch das Temperierungsmedium bewirkten Temperaturänderung des Trägersubstrats. Hierzu umfasst das Trägersubstrat vorzugsweise ein Material, dessen Wärmeleitwert so gewählt ist, dass die Temperatur der Probe mit einer Temperierungsrate oberhalb der genannten Grenze veränderlich ist. Besonders bevorzugt ist der Wärmeleitwert des Trägersubstrats größer als 1.000 W/Km, insbesondere größer als 1.500 W/Km.

Das Trägersubstrat kann aus jedem Material hergestellt sein, das den gewünschten Wärmeleitwert und eine genügende Festigkeit bei dem Druck des Temperierungsmediums aufweist. Beispielsweise kann das Trägersubstrat aus Kupfer (400 W/Km) oder Silber (430 W/Km) hergestellt sein. In diesen Fällen kann sich zwar die für eine ausreichende Festigkeit erforderliche Dicke des Trägersubstrats nachteilig auf den Wärmeleitwert und die erzielbare Temperierungsrate auswirken. Dies ist jedoch unkritisch, wenn an die Temperierungsrate geringe Anforderungen gestellt werden und/oder falls die Probe selbst bei einem relativ zum Atmosphärendruck erhöhten Druck angeordnet ist.

Gemäß einer besonders bevorzugten Ausführungsform der Erfindung ist das Trägersubstrat aus Diamant hergestellt. Das Trägersubstrat umfasst eine Diamant-Scheibe, z. B. aus synthetisch hergestelltem Diamant mit einer Dicke geringer als 2 mm, insbesondere geringer als 500 µm. Die Verwendung von Diamant hat besondere Vorteile hinsichtlich optimaler Werte des Wärmeleitwerts (je nach Herstellung, z. B. 1.500 W/Km) und der Festigkeit bei geringer Substratdicke.

Gemäß einer weiteren vorteilhaften Ausführungsform der Erfindung ist vorgesehen, dass das Temperierungsmedium unmittelbar vor dem oder während des Kontakts mit der Rückseite des Trägersubstrats einer Entspannung (Druckreduzierung) unterzogen wird. Die Erfindung bietet in diesem Fall eine Hochgeschwindigkeits-Temperatureinstellung mit einer Expansion überkritischer Fluide. Vorteilhafterweise kann damit bei der Abkühlung und/oder bei der Aufheizung eine weitere Temperatursenkung und/oder Temperaturerhöhung des Temperierungsmediums erzielt werden. Auf der Grundlage des isenthalpischen Drosseleffekts ergibt sich bei einem Temperierungsmedium mit einem negativen Joule-Thompson Koeffizienten die Abkühlung, während ein Temperierungsmedium mit einem positiven Joule-Thompson-Koeffizienten die Aufheizung ergibt. Je nach Startbedingung (Druck und Temperatur) kann der Joule-Thompson-Koeffizient positiv oder negativ sein. Des Weiteren werden durch die Entspannung ausreichend lange (daher vom Gefrierpunkt der Probe bis unterhalb des Probenglaspunkts, bzw. umgekehrt beim Aufheizen) große Strömungsgeschwindigkeiten möglich, die für die Abfuhr (bzw. Zufuhr beim Aufheizen) der Wärmeenergie nötig sind.

Bei der Anwendung von komprimiertem Stickstoff als Temperierungsmedium ist der isenthalpische Drosseleffekt von besonderem Vorteil: vorgeheizter Stickstoff erwärmt sich bei Expansion, vorgekühlter Stickstoff kühlt bei Expansion ab. Beispielsweise kann bei der Anwendung von komprimiertem Stickstoff bei 100 bar und - 100 °C (Startbedingungen innerhalb des sogenannten Inversionsbereichs, innerhalb dessen eine Entspannung von einer Abkühlung begleitet ist) die erwünschte zusätzliche Kühlung am Wärmetauscher (Trägersubstrat) erreicht werden. Soll erwärmt werden, lässt sich durch Entspannung von Stickstoff bei z. B. 100 bar und + 300 °C eine zusätzliche Aufheizung am Wärmetauscher erreichen, da diese Startbedingungen außerhalb des Inversionsbereiches liegen (in diesem Fall wird die Entspannung von einer Temperaturerhöhung begleitet).

Weitere Vorteile der Erfindung, insbesondere bei der Ausführungsform mit der Entspannung des das Temperierungsmediums, ergeben sich, wenn das Endteil der Zufuhrleitung, das die Austrittsöffnung bildet, mindestens eine der folgenden Eigenschaften aufweist. Gemäß einer ersten Variante kann das das Endteil so angeordnet sein, dass der Abstand der Austrittsöffnung von der Rückseite des Trägersubstrats veränderlich ist. Beispielsweise kann die Zufuhrleitung beweglich und das Endteil relativ zum Trägersubstrat justierbar sein. Alternativ oder zusätzlich kann das Endteil so gestaltet sein, dass der Durchmesser der Austrittsöffnung veränderlich ist. Der genannte Abstand und/oder der Durchmesser können in Abhängigkeit von der konkreten Anwendung der Erfindung für einen optimalen Wärmeübergang und/oder eine vorbestimmte Temperatureinstellung des Temperierungsmediums gewählt werden. Gemäß einer weiteren, besonders bevorzugten Variante hat die Austrittsöffnung die Gestalt einer Düse. Die Düse bildet die Austrittsöffnung der Zufuhrleitung und ist so geformt, dass die Austrittsöffnung einen geringeren Durchmesser als die Zufuhrleitung hat. Gemäß einer weiteren Variante ist das Endteil von der Zufuhrleitung trennbar angeordnet. Es kann beispielsweise eine austauschbare Düse vorgesehen sein. Wenn das Endteil, insbesondere die Düse, über eine Schraubverbindung mit der Zufuhrleitung gekoppelt ist, können vorteilhafterweise sowohl die Austauschbarkeit (zur Variation des Düsendurchmessers) als auch die Positionierbarkeit (zur Variation des Abstands zum Trägersubstrat) vereinfacht werden. Des Weiteren kann die Probenkammer mit dem Kühler zur Präparation der Probe (beispielsweise die Kultivierung von Zellen) von der Zuleitungsperipherie lösbar sein.

Gemäß einer weiteren vorteilhaften Ausführungsform der Erfindung wird die Zufuhr des Temperierungsmediums zu der Rückseite des Trägersubstrats mit einem schaltbaren Stellglied, z. B. einem elektrisch oder pneumatisch schaltbaren Ventil, in der Zufuhrleitung des Temperierungsmediums aktiviert (gestartet). Das Stellglied ist vom Wärmetauscher (Trägersubstrat) getrennt angeordnet. Die Betätigung des Stellglieds ermöglicht einen definierten Temperierungsstart. Bei Freigabe des Stellglieds trifft das Temperierungsmedium mit einer vorbestimmten, definierten Verzögerung auf das Trägersubstrat. Dies erlaubt die Fixierung von ausgewählten Zuständen der Probe, die zuvor während der Beobachtung identifiziert wurden.

Weitere Vorteile der Erfindung ergeben sich aus der Temperierung des Trägersubstrats von dessen Rückseite her, wobei die Probe an der Vorderseite frei liegen kann. Es wird beispielsweise ermöglicht, eine optische und/oder eine elektrische Messung an der Probe vor, während und/oder nach der Zufuhr des Temperierungsmediums durchzuführen. Es ist eine Messeinrichtung angeordnet, die z. B. ein optisches Mikroskop, insbesondere ein Konfokal-Mikroskop, oder eine Beobachtungsoptik und/oder eine Impedanzmesseinrichtung umfasst. Mit dem Mikroskop kann die Probe hochauflösend beobachten werden, während die Probe in unveränderter Position auf dem Trägersubstrat bleibt. Die Impedanzmesseinrichtung kann Messelektroden umfassen, die auf der Vorderseite des Trägersubstrats angeordnet sind.

Des Weiteren ermöglicht die Temperierung an der Rückseite eine Beaufschlagung der Probe mit einem Druck, der höher als der Atmosphärendruck ist. Der erhöhte Druck an der Probe kann mit einer Druckeinrichtung, z. B. einer hydraulischen Pumpe, erzeugt werden. Ein weiterer Vorteil eines Trägersubstrats aus Diamant in Zusammenhang mit dessen hohen mechanischen Festigkeit ist, dass der probenseitig erhöhte Druck toleriert werden kann, auch wenn an der Rückseite des Trägersubstrats Normaldruck herrscht. Ist die Kühlleistung für die Vitrifikation einer gegebenen Probe (z.B. sehr hoher Wasseranteil in der Probelösung) nicht ausreichend, kann die Vitrifikation dennoch durch eine vorausgehende Druckerhöhung an der Probe erreicht werden. Unter hohem Druck sinkt der Gefrierpunkt wässriger Lösungen und der in kurzer Zeit zu überbrückende Temperaturbereich, in dem die Gefahr einer Eiskristallbildung besteht ("No man's land"), wird kleiner.

Gemäß einer weiteren vorteilhaften Variante der Erfindung kann nach der Temperaturänderung an der Probe, insbesondere nach der Abkühlung, eine dauerhafte Temperierung des Trägersubstrats mit der Probe vorgesehen sein. Beispielsweise kann während der Untersuchung des Standbilds mit verschiedenen Messmethoden die tiefe Temperatur mit einer drucklosen Durchleitung eines gasförmigen oder flüssigen Thermostatmediums auf der Rückseite des Trägersubstrats aufrechterhalten werden. Des Weiteren kann eine Kryokonservierung der sprunghaft eingefrorenen Probe vorgesehen sein. Die Kryokonservierung kann mit einem der an sich bekannten Verfahren ausgeführt werden, wobei das Trägersubstrat mit der Probe ggf. von der Temperierungsvorrichtung in eine Kryokonservierungsvorrichtung, z. B. in einen Kryotank mit flüssigem Stickstoff überführt wird. Das Thermostatmedium wird mit einer Thermostateinrichtung bereitgestellt, die mit der erfindungsgemäßen Temperierungsvorrichtung verbunden ist. Das Thermostatmedium kann z. B. flüssigen Stickstoff umfassen, der im nichtüberkritischen Zustand ist.

Wenn die Temperierung eine Temperatursenkung der Probe umfasst und das Temperierungsmedium ein Kühlmedium, z. B. überkritischer Stickstoff mit einer Temperatur von - 140 °C, ist, erfolgt vorzugsweise eine Abkühlung der Probe auf eine Temperatur unterhalb von - 137 °C. Dieser Temperaturbereich hat sich als geeignet für die Fixierung dynamischer molekularer Vorgänge, z. B. in Zellen, erwiesen. Die Abkühlung erfolgt besonders bevorzugt mit einer derartigen Abkühlrate, dass die Probe in einem eiskristallfreien Zustand bleibt (Vitrifikation). Mit anderen Worten, die Probe wird auf eine Temperatur unter - 137 °C abgekühlt, ohne Eiskristalle zu bilden. Vorteilhafterweise kann eine Wahl von Zustandsgrößen des Kühlmediums derart vorgesehen sein, dass das Kühlmedium bei oder nach dem Kontakt mit dem Trägersubstrat ohne Phasenumwandlung in den gasförmigen Zustand übergeht.

Wenn die Temperierung eine Temperaturerhöhung der Probe umfasst und das Temperierungsmedium ein Heizmedium, z. B. überkritischer Stickstoff bei + 40 °C, ist, erfolgt vorzugsweise eine Erwärmung der Probe auf eine Temperatur im Bereich von - 40 °C (homogener Nukleationspunkt von Wasser) bis 37 °C. Die Erwärmung erfolgt mit einer derartigen Heizrate, dass die Probe in einem eiskristallfreien Zustand bleibt. Mit anderen Worten, die Probe wird so schnell auf eine Temperatur oberhalb von 0 °C erwärmt, dass Temperaturbereiche, in denen Phasenänderungen auftreten können, durchlaufen werden, ohne dass Eiskristalle wachsen.

Bei der Erwärmung insbesondere von biologischen Proben, ist ein Übersteigen der Temperatur über einen vorbestimmten, insbesondere physiologischen Zielwert zu vermeiden. Eine Überhitzung würde eine deutliche Störung der Systemhistorie im Allgemeinen und physiologisch extrem schädlich im Bereich biologischer Untersuchungsobjekte sein. Gemäß einer besonders bevorzugten Ausführungsform der Erfindung ist daher die Wahl vorbestimmter Startbedingungen des Druckes, der Temperatur und der Heizmediummenge derart vorgesehen, dass nach Zufuhr einer bestimmten Menge überkritischen Heizmediums die Endtemperatur erreicht und nicht überschritten wird. Die geeigneten Startbedingungen können vom Fachmann in Abhängigkeit von den thermodynamischen Eigenschaften des Heizmediums, des Wärmeleitwerts und der Wärmekapazität des Trägersubstrats und des Wärmeleitwerts und der Wärmekapazität der Probe berechnet werden. Ein derartiges sprunghaftes, jedoch definiertes Aufheizen ist bei herkömmlichen Techniken weder praktisch noch konzeptionell gelöst.

Für die verschiedenen Temperierungsaufgaben umfasst die Temperierungsvorrichtung vorzugsweise mindestens einen Druckbehälter, der zur Aufnahme des überkritischen Temperierungsmediums eingerichtet ist, und/oder einen thermisch isolierten Vorratsbehälter, der zur Aufnahme eines druckfreien Thermostatmediums eingerichtet ist.

Vorteile für eine abwechselnde Verwendung der Temperierungsvorrichtung zur Abkühlung und Erwärmung der Probe ergeben sich, wenn die Temperierungsvorrichtung einen ersten Druckbehälter, der zur Aufnahme eines überkritischen Kühlmediums eingerichtet ist, und einen zweiten Druckbehälter umfasst, der zur Aufnahme eines überkritischen Heizmediums eingerichtet ist. Des Weiteren ist für diesen Fall eine Schalteinrichtung vorgesehen, mit der abwechselnd einer der ersten und zweiten Druckbehälter mit der Zufuhrleitung koppelbar ist. Vorteilhafterweise bei dieser Variante der Erfindung nur eine einzige Zufuhrleitung erforderlich. Alternativ ist ein Aufbau mit den ersten und zweiten Druckbehältern möglich, von denen jeweils eine Zufuhrleitung zum Trägersubstrat führt.

Des Weiteren können die Druck- und Vorratsbehälter so kombiniert werden, dass Kühlmedium für den negativen Temperatursprung sowie Thermostatmedium für die stationäre Temperierung und Heizmittel dieselbe Anordnung durchfließen. Die Zuleitung von Kühl- und Heizmitteln kann über schaltbare Leitungen, z.B. mit einem fluidischen Drehschalter und/oder pneumatischen Ventilen, erfolgen. Der Kühler selbst bleibt so frei von beweglichen und elektrischen Bauteilen.

Wichtige Merkmale und Vorteile der Erfindung können wie folgt zusammengefasst werden. Die o.g. Aufgaben werden durch eine überkritische Prozessführung gelöst. Die Erfindung ermöglicht aufgrund der hohen hohe Dichte und Strömungsgeschwindigkeit des Temperierungsmediums einen effizienten Abtransport (bzw. eine effiziente Zuführung) von Wärme vom bzw. zum Trägersubstrat. Mit der Erfindung werden isolierende Phasengrenzen am Wärmetauscher, wie das Leidenfrost'sche Phänomen beim Kühlen (bzw. Kondensation beim Heizen) verhindert. Die optional vorgesehene Entspannung des überkritischen Mediums am Wärmetauscher führt bei vorgekühltem Stickstoff zu einer weiteren Abkühlung durch den isenthalpischen Drosseleffekt (Joule-Thompson-Koeffizient negativ). Bei vorgeheiztem Stickstoff führt der gleiche Effekt zu einer weiteren Aufheizung (Joule-Thompson-Koeffizient positiv). Somit wird bei geeigneter Wahl der Startparameter der gewünschte Vorgang (Kühlung/Heizung) noch weiter begünstigt.

Weitere Einzelheiten und Vorteile der Erfindung werden im Folgenden unter Bezug auf die beigefügten Zeichnungen beschrieben. Es zeigen:
- Figuren 1 und 2:: Ausführungsformen der erfindungsgemäßem Zufuhr überkritischen Temperierungsmediums zu einem Trägersubstrat;
- Figur 3:: eine schematische Übersichtsdarstellung einer bevorzugten Ausführungsform der erfindungsgemäßen Temperierungsvorrichtung; und
- Figuren 4 und 5:: Einzelheiten weiterer Ausführungsformen der erfindungsgemäßen Temperierungsvorrichtung.

Ausführungsbeispiele der Erfindung werden im Folgenden unter beispielhaftem Bezug auf die Vitrifikation (kristallfreies Einfrieren) und das kristallfreies Auftauen biologischer Proben beschrieben. Die Umsetzung der Erfindung ist jedoch nicht auf diese Probenart beschränkt, sondern entsprechend mit Proben anderer Typen, wie sie oben erwähnt sind, ausführbar. Wenn im Folgenden beispielhaft auf die Vitrifikation Bezug genommen wird, können die jeweiligen Merkmale analog auch beim eisfreien Erwärmen realisiert sein. Die Zeichnungen sind schematische Darstellungen, die der Illustration von Merkmalen der Erfindung dienen. In der Praxis können die gezeigten Teile der erfindungsgemäßen Temperierungsvorrichtung mit abgewandelten geometrischen Eigenschaften und Größenverhältnissen realisiert sein. Des Weiteren kann die Temperierungsvorrichtung mit Sensoren, z. B. Temperatur- und/oder Drucksensoren, und Steuereinheiten ausgestattet sein, die für die Kontrolle des Temperierungsverfahrens konfiguriert und im Einzelnen nicht gezeigt sind. Die Handhabung biologischer Proben, insbesondere deren Vorbereitung für die Vitrifikation, die Kryokonservierung oder die Beobachtung oder Messung, werden im Einzelnen nicht beschrieben, soweit diese Verfahren an sich aus dem Stand der Technik bekannt sind.

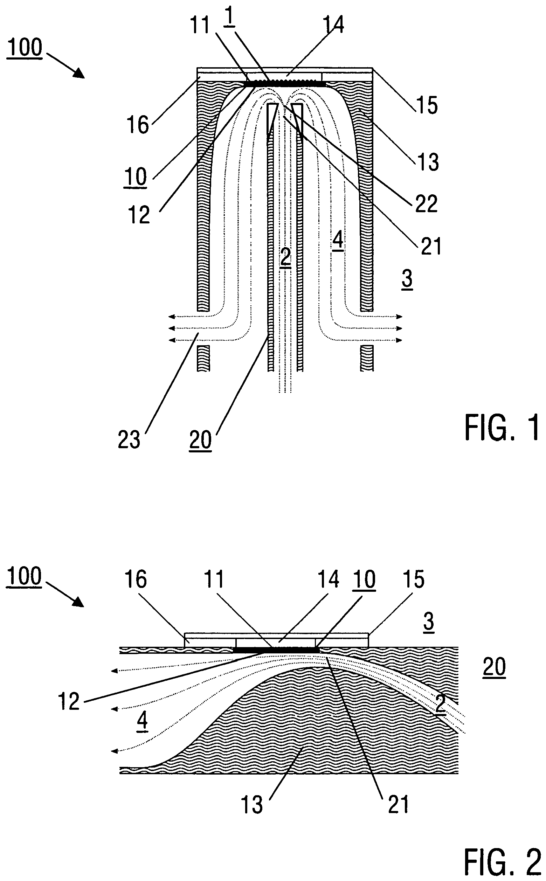

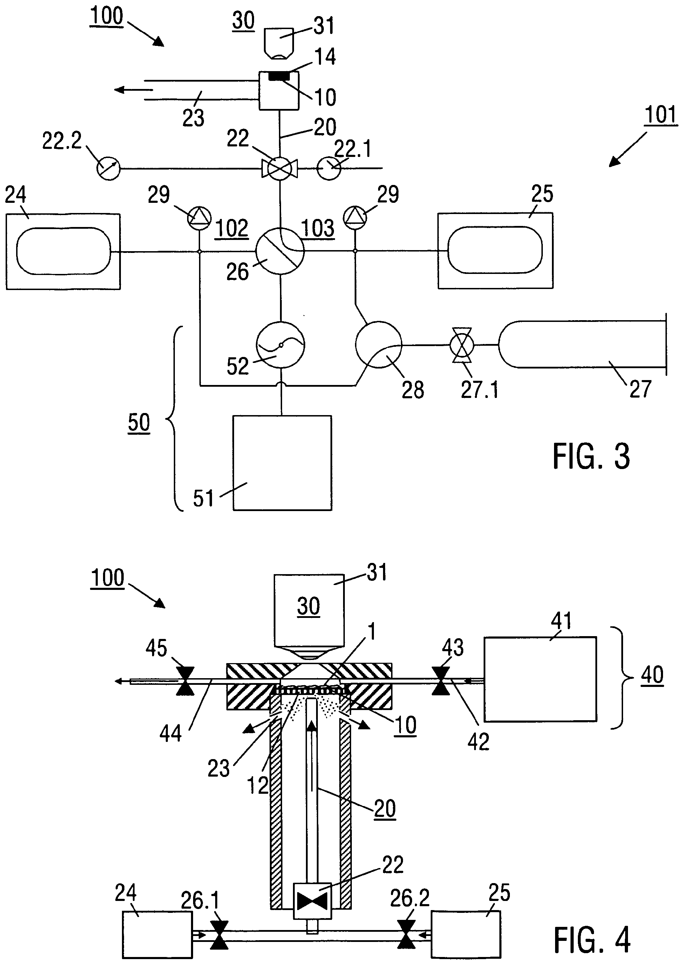

Wichtige Merkmale der erfindungsgemäßen Temperierungsvorrichtung 100 (Kühler oder Heizer 100) sind in den Figuren 1 und 2 gezeigt, die ein Trägersubstrat 10 als Wärmetauscher und zur Aufnahme der Probe 1, des Weiteren eine Zufuhrleitung 20 für das Temperierungsmedium 2, ggf. mit einer Düse 22, und eine Ableitung 23 illustrieren. Die Anordnung der Komponenten 10, 20 ist so gewählt, dass der durchströmte Querschnitt in Strömungsrichtung anwächst, so dass unmittelbar an das Trägersubstrat 10 angrenzend eine Entspannung des überkritischen Temperierungsmediums erfolgt. Da der Temperaturverlauf von der Geometrie des Kühlers (oder Heizers) abhängt, ist es von Vorteil, die Düse 22 und ihren Abstand zum Trägersubstrat 10 variabel auszuführen. Die Düse 22 in Figur 1 kann über ein Schraubgewinde mit der Zufuhrleitung 20 gekoppelt und daher sowohl wechselbar als auch positionierbar sein. So können gewünschte Temperaturverläufe eingestellt werden. Dies ist von Vorteil, wenn unterschiedliche Proben maximale Kühlraten (oder Heizraten) in unterschiedlichen Temperaturbereichen ("No man's lands") erfordern. In der Praxis sind die Komponenten 10, 20 mit peripheren Mediensteuer- und Messeinrichtungen 101, 30 kombiniert, die mit weiteren Einzelheiten unten unter Bezug auf die Figuren 3 bis 5 beschrieben sind.

Im Einzelnen umfasst die Temperierungsvorrichtung 100 gemäß Figur 1 das Trägersubstrat 10 mit einer Vorderseite 11 und einer Rückseite 12. Das Trägersubstrat 10 ist mit einem Gehäuse 13 gehaltert, das druckfest einen äußeren Niederdruckbereich 3 von einem inneren Hochdruckbereich 4 trennt. Im Niederdruckbereich 3 herrscht beispielsweise Normaldruck, während im Hochdruckbereich 4 der erhöhte Arbeitsdruck des Temperierungsmediums 2 herrscht. Das Gehäuse 13 umfasst zum Beispiel Edelstahl. Das Trägersubstrat 10 umfasst eine Diamantscheibe, z. B. mit einem Durchmesser von 4 mm und einer Dicke von 1000 µm. Die Vorderseite 11 des Trägersubstrats 10 bildet den Boden einer Probenkammer 14, die nach oben durch ein Beobachtungsfenster 15 und seitlich durch einen Abstandhalter 16 zwischen dem Gehäuse 13 und dem Beobachtungsfenster 15 begrenzt wird. Das Beobachtungsfenster 15 umfasst zum Beispiel Kunststoff oder Glas oder, falls die Probenkammer 14 mit einem erhöhten Druck beaufschlagt wird (siehe unten), ebenfalls Diamant, Zirkonia oder Saphir. Der Abstandhalter 16 umfasst zum Beispiel Kunststoff oder Edelstahl. Die Rückseite 12 des Trägersubstrats 10 weist zum Hochdruckbereich 4, in dem die Zufuhrleitung 20 angeordnet ist.

Die Zufuhrleitung 20 ist ein Hohlzylinder aus Edelstahl, an dessen zur Rückseite 12 des Trägersubstrats 10 weisenden Ende die Düse 22 angeschraubt ist. Die Zufuhrleitung 20 hat eine mechanische Festigkeit derart, dass das Temperierungsmedium 2 im überkritischen Zustand und mit einem Druck, der höher als der Atmosphärendruck ist, deutlich höher als pₖ (33,8bar), z.B. mindestens 100 bar, in der Zufuhrleitung 20 aufgenommen und geleitet werden kann. Der Abstand der Düse 22 von der Rückseite 12 ist z. B. im Bereich von 0,1 mm bis 1 mm gewählt. Der Durchmesser der Düse 22 beträgt z. B. 500 µm bis 3 mm. Das Temperierungsmedium 2, das aus der Düse 22 austritt, strömt senkrecht auf die Rückseite 12, wo ein Wärmeaustausch mit dem Trägersubstrat 10 erfolgt. Anschließend strömt das Temperierungsmedium 2 seitlich zum Rand der Rückseite 12 und mit umgekehrter Richtung bis zu der Ableitung 23. Wenn die Temperierungsbedingungen so gewählt sind, dass das Temperierungsmedium 2 nach dem Wärmetausch die flüssige Phase bildet, erfolgt über die Ableitung 23 und ggf. weitere Leitungen (nicht dargestellt) ein Auffangen des Temperierungsmediums 2. Andernfalls kann das Temperierungsmedium 2 nach dem Wärmetausch die gasförmige Phase bilden, so dass das gasförmige Temperierungsmedium 2 durch die Ableitung 23 in die Umgebung abfließen kann.

Gemäß dem in Figur 2 gezeigten Ausführungsbeispiel umfasst die Temperierungsvorrichtung 100 ebenfalls das Trägersubstrat 10 mit der Vorderseite 11 und der Rückseite 12, das mit dem Gehäuse 13 (teilweise gezeigt) gehaltert ist. Außerhalb des Gehäuses 13 ist der Niederdruckbereich 3, während im Inneren des Gehäuses 13 der Hochdruckbereich 4 gebildet ist. Auf der Außenseite des Gehäuses 13 sind der Abstandhalter 16 und das Beobachtungsfenster 15 so angeordnet, dass über der Vorderseite 11 des Trägersubstrats 10 die Probenkammer 14 gebildet wird.

Im Unterschied zu dem in Figur 1 gezeigten Ausführungsbeispiel sind die Zufuhrleitung 20 und das Gehäuse 13 für ein tangentiales Anströmen des überkritischen Kühl- oder Heizmediums 2 an das Trägersubstrat 10 konfiguriert. Die Zufuhrleitung 20 ist in einen Körper des Gehäuses 13 integriert und so geformt, dass sich die Zufuhrleitung 20 an ihrem Ende an die Rückseite 12 angrenzend aufweitet. In diesem Fall liefert der kompakte Körper des Gehäuses 13 die erforderliche Druckfestigkeit der Zufuhrleitung 20, so dass diese das Temperierungsmedium 2 im überkritischen Zustand und mit dem erhöhten Druck aufnehmen und durchleiten kann. Das Temperierungsmedium 2 (Kühl- oder Heizmedium 2) erfährt unmittelbar am Trägersubstrat 10 eine Entspannung, so dass sich die Temperatur des Kühl- oder Heizmediums 2 ändert und die Abkühlung oder Erwärmung des Trägersubstrats 10 unterstützt wird.

Figur 3 illustriert die Temperierungsvorrichtung 100 mit weiteren Komponenten, umfassend die Messeinrichtung 30 und die Mediensteuereinrichtung 101. Die Messeinrichtung 30 umfasst eine Beobachtungsoptik 31 eines optisches Mikroskop (teilweise dargestellt), mit dem die Probe in der Probenkammer 14 der Temperierungsvorrichtung 100 beobachtbar ist. Die Mediensteuereinrichtung 101 umfasst gemäß Figur 3 einen Abkühlzweig 102, einen Heizzweig 103 und eine Thermostateinrichtung 50, so dass mit dem Ausführungsbeispiel flexibel die Probe sprunghaft eingefroren, aufgetaut oder dauerhaft kryokonserviert werden kann. Da die genannten Funktionen nicht bei allen Anwendungen der Erfindung gleichzeitig bereitgestellt werden müssen, können abgewandelte Ausführungsbeispiele nur einen der genannten Abkühl- und Heizzweige 102, 103, ggf. jeweils in Kombination mit der Thermostateinrichtung 50 umfassen.

Der Abkühlzweig 102 umfasst einen ersten Druckbehälter 24, der zur Aufnahme eines überkritischen Kühlmediums eingerichtet und über eine Schalteinrichtung 26 und ein schaltbares Ventil 22 mit der Zufuhrleitung 20 verbunden ist. Der erste Druckbehälter 24 ist mit einem thermisch isolierten Behälter, einem Kompressor, einem Kühlgerät und einer Steuerung (nicht gezeigt) ausgestattet, mit denen der überkritische Zustand des Kühlmediums im ersten Druckbehälter 24 einstellbar ist. Die Schalteinrichtung 26 umfasst ein 4-Wege-Stellglied. Das schaltbare Ventil 22 ist mit einem Schalter 22.1 und einem Manometer 22.2 verbunden.

Der Heizzweig 103 umfasst einen zweiten Druckbehälter 25, der zur Aufnahme eines überkritischen Heizmediums eingerichtet und ebenfalls über die Schalteinrichtung 26 und das schaltbare Ventil 22 mit der Zufuhrleitung 20 verbunden ist. Der zweite Druckbehälter 25 ist auch mit einem thermisch isolierten Behälter, einem Kompressor, einem Heizgerät und einer Steuerung (nicht gezeigt) ausgestattet, mit denen der überkritische Zustand des Heizmediums im zweiten Druckbehälter 25 einstellbar ist.

Die Abkühl- und Heizzweige 102, 103 sind des Weiteren mit einer Gasflasche 27 mit einem Druckminderer 27.1 und Überdruckventilen 29 verbunden. Die Gasflasche 27 ist über ein 2-Wege-Stellglied 28 wahlweise mit den Abkühl- oder Heizzweigen 102, 103 koppelbar. Mit dem 2-Wege-Stellglied 28 können Abkühl- und Heizzweig unabhängig voneinander aus derselben Gasquelle beschickt werden. Die Beschickungsmengen ergeben sich aus gewähltem Druck und gewählter Temperatur der Reservoire 24 und 25.

Die Thermostateinrichtung 50 umfasst einen Vorratsbehälter 51, der zur Aufnahme eines druckfreien Thermostatmediums, z. B. von flüssigem Stickstoff unter Normaldruck, eingerichtet ist, und eine Pumpe 52 zum stationären Transport des Thermostatmediums über die Schalteinrichtung 26 und das schaltbare Ventil 22 zu der Zufuhrleitung 20.

Zur Durchführung des erfindungsgemäßen Verfahrens wird zunächst eine Probe, wie z. B. eine adhärente Zellkultur, in der Probenkammer 14 auf der Vorderseite 11 des Trägersubstrats (Einzelheiten z. B. siehe Figuren 1 oder 2) angeordnet und ggf. einer Kultivierung unterzogen. Die Kultivierung umfasst z. B. ein Wachstum und eine Differenzierung der Zellen. Wenn in einer bestimmten Kultivierungsphase die Probe untersucht werden soll, wird der aktuelle Zustand der Probe eingefroren.

Die Auslösung der schlagartigen Abkühlung wird durch das Öffnen des Ventils 22 erzielt, das ebenfalls außerhalb des eigentlichen Kühlers liegt. Die Auslösung kann zu willkürlichen Zeitpunkten während der simultanen Beobachtung der Probe erfolgen. Das Kühlmedium 2 wird zu der Rückseite des Trägersubstrats zugeführt, wobei sich die Temperatur der Probe sprungartig reduziert. Hierzu wird die Schalteinrichtung 26 so eingestellt, dass der Abkühlzweig 102 mit der Zufuhrleitung verbunden ist. Zum gewünschten Zeitpunkt wird das Ventil 22 freigeschaltet, so dass das Heizmedium im überkritischen Zustand und mit einem erhöhten Druck vom ersten Druckbehälter 24 zu der Rückseite des Trägersubstrats strömt und von dieser durch den Auslass 23 abgeführt wird. Die Probe wird vitrifiziert. Für die Dauer einer Untersuchung wird der vitrifizierte Zustand aufrechterhalten, indem die Schalteinrichtung 26 so eingestellt wird, dass die Thermostateinrichtung 50 mit der Zufuhrleitung verbunden ist. Mit der Thermostateinrichtung 50 wird die Temperatur der Probe z. B. auf - 140 ° C eingestellt. Anschließend wird die Schalteinrichtung 26 so eingestellt, dass der Heizzweig 103 mit der Zufuhrleitung 20 verbunden wird. Die Probe wird sprunghaft aufgetaut ohne Wachstum von Eiskristallen. Im aufgetauten Zustand kann die Kultivierung fortgesetzt werden. Alternativ kann anstelle des Heizens der Probe diese einer weiteren Kryokonservierung z. B. in einem Kryotank zugeführt werden.

Allgemein können die Schritte des sprunghaften Einfrierens, Untersuchens und sprunghaften Erwärmens periodisch während verschiedener Phasen dynamischer Zustände der Probe, z. B. während verschiedener Kultivierungsphasen der Zellkultur, wiederholt werden.

Vorteilhafterweise erlaubt die Erfindung, den Kühl- und den Heizvorgang sowie die zwischenzeitliche Thermostatisierung mit Kühlmedium in einer einzigen technischen Anordnung durchzuführen. Es wird lediglich zwischen den Druckbehältern überkritischer Kühl- und Heizmedien sowie dem Vorratsbehälter mit druckfreien Thermostatmedium hin und her geschaltet. Der eigentliche Kühler oder Heizer kann daher frei von beweglichen oder elektrischen Bauteilen ausgeführt werden.

Das Verfahren wurde durch ein sprunghaftes Abkühlen einer L929-Zellkultur getestet. Es zeigte sich, dass die Morphologie und die Abmessungen der Zellen während der Zyklen mit sprunghaften Temperaturänderungen vollständig erhalten bleiben. Dazu im Gegensatz kam durch eine langsame Erwärmung über den Glaspunkt des Mediums zur Ausbildung sichtbarer Eisdomänen und zur einhergehenden Zerstörung von Zellen. Diese Schädigung wird durch das erfindungsgemäß ermöglichte schnelle Erwärmen vermieden ("übersprungen").

Figur 4 zeigt weitere Einzelheiten einer abgewandelten Ausführungsform der Temperierungsvorrichtung 100 mit dem Trägersubstrat 10, der Zufuhrleitung 20 im Gehäuse 23, und der Beobachtungsoptik 31 einer optischen Messeinrichtung 30. Wie in Figur 1 umfasst diese Ausführungsform einen Kühler/Heizer, der für ein frontales Anströmen der Rückseite 12 des Trägersubstrats 10 konfiguriert ist. Auf der Vorderseite 11 des Trägersubstrats 10 ist eine Probe 1 angeordnet. Die Probenkammer 14 ist abweichend von Figur 1 nicht geschlossen, sondern z. B. mit einer Druckeinrichtung 40 verbunden. Die Druckeinrichtung 40 umfasst eine Pumpe 41, die über eine Druckleitung 42 und ein Stellglied 43 mit der Probenkammer 14 verbunden ist. Von der Probenkammer 14 führt eine Entlastungsleitung 44 mit einem weiteren Stellglied 45 in die Umgebung. Mit der Druckeinrichtung 40 kann die Probe 1 mit einem erhöhten Druck beaufschlagt werden, um die Vitrifikationsbedingungen zu verbessern.

Alternativ oder zusätzlich zu der Druckeinrichtung 40 kann die Probenkammer über Fluidikleitungen mit einer Fluidikeinrichtung verbunden sein, wie es in Figur 4 am Beispiel der Druckeinrichtung 40 gezeigt ist. Die Fluidikeinrichtung kann zum Beispiel dafür angeordnet sein, der Probe 1 Kultivierungsmedien und/oder Kryoprotektiva zuzuführen. Die Zufuhr von Kultivierungsmedien und/oder Kryoprotektiva kann erfolgen, wie es von der herkömmlichen Kryokonservierugn biologischer Proben bekannt ist.

Figur 4 illustriert des Weiteren, dass abweichend von Figur 3 die Druckbehälter 24, 25 über getrennte Stellglieder 26.1, 26.2 und das Ventil 22 mit der Zufuhrleitung verbunden sind. Die Stellglieder 26.1, 26.2 ersetzen die Schalteinrichtung 26 in Figur 3, was Vorteile für eine quantitative Steuerung der Medienzufuhr haben kann.

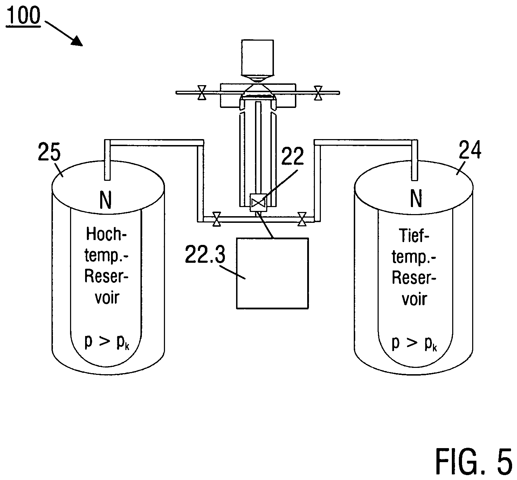

Figur 5 zeigt beispielhaft die überkritischen Medien in den Druckbehältern 24, 25, die zur Abkühlung Stickstoff bei einer Temperatur von - 140 °C und einem Druck im Bereich von 40 bis 200 bar und zur Erwärmung Stickstoff bei einer Temperatur von 0°C bis 300 °C und einem Druck im Bereich von 40 bis 200 bar umfassen. Die Zufuhr der überkritischen Medien zur Zufuhrleitung wird über das schaltbare Ventil 22 gesteuert, das mit einer elektronischen Steuerung 22.3 verbunden sein kann.

Die in der Beschreibung, den Ansprüchen und den Zeichnungen gezeigten Merkmale der Erfindung können sowohl einzeln als auch in Kombination für die Verwirklichung der Erfindung von Bedeutung sein.

## Patentansprüche

1. Verfahren zur Temperierung einer Probe (1), mit den Schritten
- Bereitstellung der Probe (1) auf einem Trägersubstrat (10), und
- Zufuhr eines Temperierungsmediums (2) zu einer Rückseite (12) des Trägersubstrats (10), wobei die Temperatur der Probe (1) sprungartig verändert wird, wobei
- das Temperierungsmedium (2) im überkritischen Zustand und mit einem Druck, der höher als der Atmosphärendruck ist, mit der Rückseite (12) des Trägersubstrats (10) in Kontakt gebracht wird,
**dadurch gekennzeichnet, dass**
- die Probe (1) auf der Vorderseite (11) des Trägersubstrats (10) bei Atmosphärendruck bereitgestellt und temperiert wird.

2. Verfahren gemäß Anspruch 1, bei dem
- das Temperierungsmedium (2) im überkritischen Zustand zu der Rückseite (12) des Trägersubstrats (10) strömt.

3. Verfahren gemäß Anspruch 1, bei dem
- das Temperierungsmedium (2) mit einer Strömungsrichtung parallel oder senkrecht zur Oberflächennormalen der Rückseite (12) des Trägersubstrats (10) strömt, und/oder
- die Zufuhr des Temperierungsmediums (2) zu der Rückseite (12) des Trägersubstrats (10) mit einem schaltbaren Stellglied (22) in einer Zufuhrleitung (20) des Temperierungsmediums (2) ausgelöst wird.

4. Verfahren gemäß einem der vorhergehenden Ansprüche, bei dem
- das Temperierungsmedium (2) unmittelbar vor dem oder während des Kontakts mit der Rückseite (12) des Trägersubstrats (10) einer Entspannung unterzogen wird.

5. Verfahren gemäß einem der vorhergehenden Ansprüche, mit mindestens einem der Schritte
- mindestens eines von einer optischen und einer elektrischen Messung an der Probe vor, während und/oder nach der Zufuhr des Temperierungsmediums (2), und
- Thermostatisierung des Trägersubstrats (10) mit der Probe (1) .

6. Verfahren gemäß einem der vorhergehenden Ansprüche, bei dem
- das Temperierungsmedium (2) ein Kühlmedium, insbesondere überkritischen Stickstoff umfasst, und
- die Temperierung eine Abkühlung der Probe (1) auf eine Temperatur unterhalb von - 137 °C umfasst.

7. Verfahren gemäß einem der vorhergehenden Ansprüche, bei dem
- die Abkühlung mit einer derartigen Abkühlrate erfolgt, dass die Probe (1) in einem eiskristallfreien Zustand bleibt (Vitrifikation) oder ausschließlich nanodisperses Eis aufweist.

8. Verfahren gemäß einem der Ansprüche 1 bis 5, bei dem
- das Temperierungsmedium (2) ein Heizmedium, insbesondere überkritischen Stickstoff umfasst, und
- die Temperierung eine Erwärmung der Probe (1) auf eine Temperatur im Bereich von - 40 °C bis 45 °C umfasst.

9. Verfahren gemäß Anspruch 8, bei dem
- die Erwärmung mit einer derartigen Heizrate erfolgt, dass die Probe (1) in einem eiskristallfreien Zustand bleibt oder das enthaltene, nanodisperse Eis nicht rekristallisiert.

10. Verfahren gemäß Anspruch 8 oder 9, mit dem Schritt
- Wahl der Menge und/oder von Zustandsgrößen des Temperierungsmediums (2) derart, dass die Temperatur der Probe (1) einen vorbestimmten Zielwert nicht überschreitet.

11. Verfahren gemäß einem der vorhergehenden Ansprüche, bei dem die Probe (1) umfasst:
- biologische Zellen, die auf der Vorderseite (11) des Trägersubstrats (10) eine adhärente Zellkultur, insbesondere in Gestalt einer Zell-Monolage, bilden, oder
- eine Schicht, die zwischen dem Trägersubstrat (10) und einem Beobachtungsfenster (15) einer Probenkammer (14), die am Trägersubstrat (10) gebildet ist, angebracht ist.

12. Temperierungsvorrichtung (100) zur Temperierung einer Probe gemäß Anspruch 1, umfassend
- ein Trägersubstrat (10) mit einer Vorderseite (11) und mit einer Rückseite (12), die für eine Zufuhr eines Temperierungsmediums (2) freiliegt, und
- eine Zufuhrleitung (20) mit einer zur Rückseite (12) des Trägersubstrats (10) weisenden Austrittsöffnung (21), wobei die Zufuhrleitung (20) zur Zufuhr des Temperierungsmediums (2) zu der Rückseite (12) des Trägersubstrats (10) angeordnet ist, wobei
- die Zufuhrleitung (20) angepasst ist, das Temperierungsmedium (2) im überkritischen Zustand und mit einem Druck, der höher als der Atmosphärendruck ist, durchzuleiten,
**dadurch gekennzeichnet, dass**
- die Vorderseite (11) des Trägersubstrats (10) zur Aufnahme der Probe (1) bei Atmosphärendruck eingerichtet ist.

13. Temperierungsvorrichtung gemäß Anspruch 12, bei der
- die Zufuhrleitung (20) und die Austrittsöffnung (21) so ausgerichtet sind, dass das Temperierungsmedium (2) mit einer Strömungsrichtung parallel oder senkrecht zur Oberflächennormalen der Rückseite (12) des Trägersubstrats (10) strömt.

14. Temperierungsvorrichtung gemäß einem der Ansprüche 12 bis 13, bei der
- das Trägersubstrat (10) ein Material umfasst, dessen Dicke und Wärmeleitfähigkeit so gewählt sind, dass die Temperatur der Probe (1) mit einer Temperierungsrate veränderlich ist, die größer als 5.000 K/s, insbesondere größer als 20.000 K/s ist.

15. Temperierungsvorrichtung gemäß Anspruch 14, bei der
- das Trägersubstrat (10) eine Diamant-Scheibe umfasst.

16. Temperierungsvorrichtung gemäß einem der Ansprüche 12 bis 15, mit mindestens einem der Merkmale
- mindestens eines von einem Abstand der Austrittsöffnung (21) von der Rückseite (12) des Trägersubstrats (10) und einem Durchmesser der Austrittsöffnung (21) ist veränderlich,
- die Austrittsöffnung (21) hat die Gestalt einer Düse,
- ein Endteil der Zufuhrleitung, das die Austrittsöffnung (21) bildet, ist von der Zufuhrleitung (20) trennbar,

17. Temperierungsvorrichtung gemäß einem der Ansprüche 12 bis 16, bei der
- die Zufuhrleitung (20) mit einem schaltbaren Stellglied (22) ausgestattet ist, mit der die Zufuhr des Temperierungsmediums (2) zu der Rückseite (12) des Trägersubstrats (10) aktivierbar ist.

18. Temperierungsvorrichtung gemäß einem der Ansprüche 12 bis 17, umfassend mindestens eines von
- einer Messeinrichtung (30), die für mindestens eines von einer optischen und einer elektrischen Messung an der Probe vor, während und/oder nach der Zufuhr des Temperierungsmediums (2) eingerichtet ist,
- einer Druckeinrichtung (40), die zur Beaufschlagung der Probe (1) mit einem Druck, der höher als der Atmosphärendruck ist, eingerichtet ist, und
- einer Thermostateinrichtung (50), die zur Aufrechterhaltung einer dauerhaften Temperierung des Trägersubstrats (10) eingerichtet ist.

19. Temperierungsvorrichtung gemäß einem der Ansprüche 12 bis 18, umfassend mindestens eines von
- mindestens einem Druckbehälter (24, 25), der zur Aufnahme des überkritischen Temperierungsmediums (2) eingerichtet ist, und
- einem Vorratsbehälter (51), der zur Aufnahme eines druckfreien Thermostatmediums eingerichtet ist.

20. Temperierungsvorrichtung gemäß Anspruch 19, umfassend
- einen ersten Druckbehälter (24), der zur Aufnahme eines überkritischen Kühlmediums eingerichtet ist,
- einen zweiten Druckbehälter (25), der zur Aufnahme eines überkritischen Heizmediums eingerichtet ist, und
- eine Schalteinrichtung (26), mit der abwechselnd einer der ersten und zweiten Druckbehälter (24, 25) mit der Zufuhrleitung (20) koppelbar ist.

## Claims

1. Method for the temperature control of a sample (1), with the steps of
- providing the sample (1) on a carrier substrate (10), and
- supplying a tempering medium (2) to a rear side (12) of the carrier substrate (10), wherein the temperature of the sample (1) is changed abruptly, wherein
- the tempering medium (2) is brought into contact with the rear side (12) of the carrier substrate (10) in the supercritical state and with a pressure which is higher than the atmospheric pressure,
**characterised in that**
- the sample (1) is provided and tempered on the front side (11) of the carrier substrate (10) at atmospheric pressure.

2. Method according to claim 1, wherein
- the tempering medium (2) flows to the rear side (12) of the carrier substrate (10) in the supercritical state.

3. Method according to claim 1, wherein
- the tempering medium (2) flows with a direction of flow parallel or perpendicular to the surface normal of the rear side (12) of the carrier substrate (10), and/or
- the supply of the tempering medium (2) to the rear side (12) of the carrier substrate (10) is triggered with a switchable actuator (22) in a supply line (20) of the tempering medium (2).

4. Method according to one of the preceding claims, wherein
- the tempering medium (2) undergoes decompression immediately prior to or during contact with the rear side (12) of the carrier substrate (10).

5. Method according to one of the preceding claims, with at least one of the steps of
- at least one of an optical and an electric measurement at the sample prior to, during and/or after the supply of the tempering medium (2), and
- thermostatization of the carrier substrate (10) with the sample (1).

6. Method according to one of the preceding claims, wherein
- the tempering medium (2) comprises a cooling medium, in particular supercritical nitrogen, and
- the tempering comprises cooling of the sample (1) to a temperature below -137°C.

7. Method according to one of the preceding claims, wherein
- the cooling is performed with such a cooling rate that the sample (1) remains in an ice crystal-free state (vitrification) or has exclusively nanodispersed ice.

8. Method according to one of claims 1 to 5, wherein
- the tempering medium (2) comprises a heating medium, in particular supercritical nitrogen, and
- the tempering comprises heating the sample (1) to a temperature in the range from - 40°C to 45°C.

9. Method according to claim 8, wherein
- the heating is performed with such a heating rate that the sample (1) remains in an ice crystal-free state (vitrification) or the obtained nanodispersed ice does not recrystallize.

10. Method according to claim 8 or 9, with the step of
- selecting the quantity and/or status variables of the tempering medium (2) such that the temperature of the sample (1) does not exceed a predetermined setpoint value.

11. Method according to one of the preceding claims, wherein the sample (1) comprises:
- biological cells which form, on the front side (11) of the carrier substrate (10), an adherent cell culture, in particular in the form of a cell monolayer, or
- a layer which is provided between the carrier substrate (10) and an observation window (15) of a sample chamber (14) which is formed on the carrier substrate (10).

12. Temperature control device (100) for temperature control of a sample according to claim 1, comprising
- a carrier substrate (10) with a front side (11) and with a rear side (12), which is exposed for a supply of a tempering medium (2), and
- a supply line (20) with an outlet opening (21) which points towards the rear side (12) of the carrier substrate (10), wherein the supply line (20) is arranged for the supply of the tempering medium (2) to the rear side (12) of the carrier substrate (10), wherein
- the supply line (20) is adapted to conduct the tempering medium (2) through it in the supercritical state and with a pressure which is higher than the atmospheric pressure,
**characterised in that**
- the front side (11) of the carrier substrate (10) is configured to accommodate the sample (1) at atmospheric pressure.

13. Temperature control device according to claim 12, wherein
- the supply line (20) and the outlet opening (21) are aligned so that the tempering medium (2) flows with a direction of flow parallel or perpendicular to the surface normal of the rear side (12) of the carrier substrate (10).

14. Temperature control device according to one of claims 12 to 13, wherein
- the carrier substrate (10) comprises a material, the thickness and heat-conductivity of which are selected so that the temperature of the sample (1) is changeable with a temperature control rate which is greater than 5000 K/s, in particular greater than 20000 K/s.

15. Temperature control device according to claim 14, wherein
- the carrier substrate (10) comprises a diamond disc.

16. Temperature control device according to one of claims 12 to 15, having at least one of the features
- at least one of a distance of the outlet opening (21) from the rear side (12) of the carrier substrate (10) and a diameter of the outlet opening (21) is changeable,
- the outlet opening (21) has the configuration of a nozzle,
- an end part of the supply line which forms the outlet opening (21) can be separated from the supply line (20).

17. Temperature control device according to one of claims 12 to 16, wherein
- the supply line (20) is provided with a switchable actuator (22) with which the supply of the tempering medium (2) to the rear side (12) of the carrier substrate (10) can be activated.

18. Temperature control device according to one of claims 12 to 17, comprising at least one of
- a measurement device (30) which is configured for at least one of an optical and an electric measurement at the sample prior to, during and/or after the supply of the tempering medium (2),
- a pressure device (40) which is configured for applying a pressure which is higher than the atmospheric pressure to act on the sample (1), and
- a thermostat device (50) which is configured to maintain a long-term temperature control of the carrier substrate (10).

19. Temperature control device according to one of claims 12 to 18, comprising at least one of
- at least one pressure container (24, 25) which is configured to accommodate the supercritical tempering medium (2), and
- a storage container (51) which is configured to accommodate a pressure-free thermostat medium.

20. Temperature control device according to claim 19, comprising
- a first pressure container (24) which is configured to accommodate a supercritical cooling medium,
- a second pressure container (25) which is configured to accommodate a supercritical heating medium, and
- a switching device (26) with which alternately one of the first and second pressure containers (24, 25) can be coupled to the supply line (20).

## Revendications

1. Procédé servant à réguler la température d'un échantillon (1), comprenant les étapes
- de mise à disposition de l'échantillon (1) sur un substrat de support (10), et
- d'amenée d'un milieu de régulation de température (2) à un côté arrière (12) du substrat de support (10), dans lequel la température de l'échantillon (1) est variée brusquement, dans lequel
- le milieu de régulation de température (2) est amené en contact avec le côté arrière (12) du substrat de support (10) dans l'état supercritique et à une pression qui est plus élevée que la pression atmosphérique,
**caractérisé en ce que**
- l'échantillon (1) est mis à disposition sur le côté avant (11) du substrat de support (10) à la pression atmosphérique et thermorégulé.

2. Procédé selon la revendication 1, dans lequel
- le milieu de régulation de température (2) circule dans l'état supercritique en direction du côté arrière (12) du substrat de support (10).

3. Procédé selon la revendication 1, dans lequel
- le milieu de régulation de température (2) circule selon une direction d'écoulement de manière parallèle ou perpendiculaire par rapport à la norme de surface du côté arrière (12) du substrat de support (10), et/ou
- l'amenée du milieu de régulation de température (2) au côté arrière (12) du substrat de support (10) est déclenchée avec un organe de réglage (22) pouvant être commuté dans un conduit d'amenée (20) du milieu de régulation de température (2).

4. Procédé selon l'une quelconque des revendications précédentes, dans lequel
- le milieu de régulation de température (2) est exposé directement avant ou pendant le contact avec le côté arrière (12) du substrat de support (10) à une détente.

5. Procédé selon l'une quelconque des revendications précédentes, comprenant au moins une des étapes
- d'au moins une parmi une mesure optique et électrique au niveau de l'échantillon avant, pendant et/ou après l'amenée du milieu de régulation de température (2), et
- de thermostatisation du substrat de support (10) avec l'échantillon (1).

6. Procédé selon l'une quelconque des revendications précédentes, dans lequel
- le milieu de régulation de température (2) comprend un milieu de refroidissement, en particulier de l'azote supercritique, et
- la régulation de la température comprend un refroidissement de l'échantillon (1) à une température inférieure à -137 °C.

7. Procédé selon l'une quelconque des revendications précédentes, dans lequel
- le refroidissement est effectué à une vitesse de refroidissement telle que l'échantillon (1) reste dans un état sans cristaux de glace (vitrification) ou présente exclusivement de la glace nanodispersée.

8. Procédé selon l'une quelconque des revendications 1 à 5, dans lequel
- le milieu de régulation de température (2) comprend un milieu chauffant, en particulier de l'azote supercritique, et
- la régulation de température comprend un réchauffement de l'échantillon (1) à une température située dans la plage allant de -40 °C à 45 °C.

9. Procédé selon la revendication 8, dans lequel
- le réchauffement est effectué à une vitesse de chauffage telle que l'échantillon (1) reste dans un état sans cristaux de glace ou la glace contenue nanodispersée n'est pas recristallisée.

10. Procédé selon la revendication 8 ou 9, comprenant l'étape
- de sélection de la quantité et/ou de grandeurs d'état du milieu de régulation de température (2) de telle manière que la température de l'échantillon (1) ne dépasse pas une valeur cible prédéfinie.

11. Procédé selon l'une quelconque des revendications précédentes, dans lequel l'échantillon (1) comprend :
- des cellules biologiques, qui forment, sur le côté avant (11) du substrat de support (10), une culture de cellules adhérentes, en particulier sous la forme d'une monocouche de cellules, ou
- une couche, qui est apposée entre le substrat de support (10) et une fenêtre d'observation (15) d'une chambre d'échantillon (14), qui est formée au niveau du substrat de support (10).

12. Dispositif de régulation de température (100) servant à réguler la température d'un échantillon selon la revendication 1, comprenant
- un substrat de support (10) avec un côté avant (11) et avec un côté arrière (12), qui est dégagé pour une amenée d'un milieu de régulation de température (2), et
- un conduit d'amenée (20) avec une ouverture de sortie (21) pointant en direction du côté arrière (12) du substrat de support (10), dans lequel le conduit d'amenée (20) servant à amener le milieu de régulation de température (2) au côté arrière (12) du substrat de support (10) est disposé, dans lequel
- le conduit d'amenée (20) est adapté pour acheminer le milieu de régulation de température (2) dans l'état supercritique et à une pression qui est plus élevée que la pression atmosphérique,
**caractérisé en ce que**
- le côté avant (11) du substrat de support (10) est mis au point pour loger l'échantillon (1) à la pression atmosphérique.

13. Dispositif de régulation de température selon la revendication 12, dans lequel
- le conduit d'amenée (20) et l'ouverture de sortie (21) sont orientés de telle sorte que le milieu de régulation de température (2) circule selon une direction d'écoulement de manière parallèle ou perpendiculaire par rapport à la normale de surface du côté arrière (12) du substrat de support (10).

14. Dispositif de régulation de température selon l'une quelconque des revendications 12 à 13, dans lequel
- le substrat de support (10) comprend un matériau, dont l'épaisseur et la conductivité thermique sont choisies de telle sorte que la température de l'échantillon (1) peut varier à une vitesse de régulation de température qui est supérieure à 5 000 K/s, en particulier supérieure à 20 000 K/s.

15. Dispositif de régulation de température selon la revendication 14, dans lequel
- le substrat de support (10) comprend un disque à diamant.

16. Dispositif de régulation de température selon l'une quelconque des revendications 12 à 15, comprenant au moins une des caractéristiques suivantes
- au moins un élément parmi une distance de l'ouverture de sortie (21) par rapport au côté arrière (12) du substrat de support (10) et un diamètre de l'ouverture de sortie (21) est variable,
- l'ouverture de sortie (21) a la forme d'une buse,
- une partie d'extrémité du conduit d'amenée, laquelle forme l'ouverture de sortie (21), peut être retirée du conduit d'amenée (20).

17. Dispositif de régulation de température selon l'une quelconque des revendications 12 à 16, dans lequel
- le conduit d'amenée (20) est équipé d'un organe de réglage (22) pouvant être commuté, avec lequel l'amenée du milieu de régulation de température (2) au côté arrière (12) du substrat de support (10) peut être activée.

18. Dispositif de régulation de température selon l'une quelconque des revendications 12 à 17, comprenant au moins un élément parmi
- un système de mesure (30), qui est mis au point pour au moins une parmi une mesure optique et électrique au niveau de l'échantillon avant, pendant et/ou après l'amenée du milieu de régulation de température (2),
- un système de pression (40), qui est mis au point pour soumettre l'échantillon (1) à l'action d'une pression qui est plus élevée que la pression atmosphérique, et
- un système thermostatique (50), qui est mis au point pour maintenir une régulation de température durable du substrat de support (10).

19. Dispositif de régulation de température selon l'une quelconque des revendications 12 à 18, comprenant au moins un élément parmi
- au moins un contenant sous pression (24, 25) qui est mis au point pour recevoir le milieu de régulation de température (2) supercritique, et
- un réservoir (51), qui est mis au point pour recevoir un milieu thermostatique sans pression.

20. Dispositif de régulation de température selon la revendication 19, comprenant
- un premier contenant sous pression (24), qui est mis au point pour recevoir un milieu de refroidissement supercritique,
- un deuxième contenant sous pression (25), qui est mis au point pour recevoir un milieu chauffant supercritique, et
- un système de commutation (26), avec lequel un parmi le premier et deuxième contenant sous pression (24, 25) peut être couplé en alternance au conduit d'amenée (20).
